# EUROPEAN PATENT APPLICATION

(11) **EP 0 900 627 A2**
(43) Date of publication of application: **10.03.1999**
(21) Application number: 98116472.6
(22) Date of filing: 01.09.1998
(51) Int. Cl.: B23Q 3/157

(54) **Multi-function lathe**

(30) Priority: 04.09.1997 JP 257679/97; 17.10.1997 JP 303529/97
(71) Applicant: Mori Seiki Co., Ltd., Yamatokoriyama-shi, Nara 639-1104 (JP)
(72) Inventor: Ikenaga, Shuji, Yamatokoriyama-shi, Nara, 639-1104 (JP)
(74) Representative: Pellmann, Hans-Bernd, Dipl.-Ing.

(57) **Abstract**

A multi-function lathe is provided which essentially comprises a tool post having at least a tool spindle for rotatably holding a tool and is capable of performing a variety of machining operations such as turning, drilling and facing operations. The multi-function lathe further comprises a tool exchanger attached to a carriage and having a tool magazine for retaining a plurality of tools therein and indexing any one of the tools to a tool exchanging position and a tool exchanger arm for replacing the tool held by the tool spindle with the tool indexed on the tool magazine. The tool exchanger is movable toward and away from the tool post. When a workpiece is to be subjected to a machining operation, the tool exchanger is moved to a position remote from the tool post. For the tool replacement, the tool exchanger is moved to a position adjacent to the tool post. Therefore, the tool exchanger is prevented from interfering with the tool post during the machining operation. For the tool replacement, it is merely necessary to move a cross slide adjacent the tool exchanger without moving the carriage. Hence, the time required for the tool replacement can be reduced.

## Description

### BACKGROUND OF THE INVENTION

### 1. Field of the Invention

The present invention relates to a multi-function lathe which essentially comprises a tool spindle for rotatably holding a tool and is capable of performing a plurality of machining operations such as turning, drilling, facing and grinding operations and, more particularly, to a multi-function lathe which is capable of speedily replacing a tool attached to a tool spindle with another tool.

### 2. Description of the Prior Art

A plurality of machining operations are generally required for machining of a part (or workpiece). Such machining operations include a turning operation as well as a peripheral facing operation, a boring operation and the like to be performed after the turning operation. The turning operation is typically performed on a lathe, while the facing and boring operations are typically performed on a machining center. Therefore, various machining tools suitable for the respective machining operations are used for the machining of the workpiece. The use of a greater number of machining tools increases the total workpiece handling time, resulting in an increase in the overall turnaround time. Further, the workpiece handling is cumbersome, and the machining precision is reduced due to accumulation of workpiece positioning errors.

In view of this, a multi-function lathe has been proposed in which a workpiece once chucked can be subjected to a plurality of machining operations such as turning, drilling, facing and grinding operations.

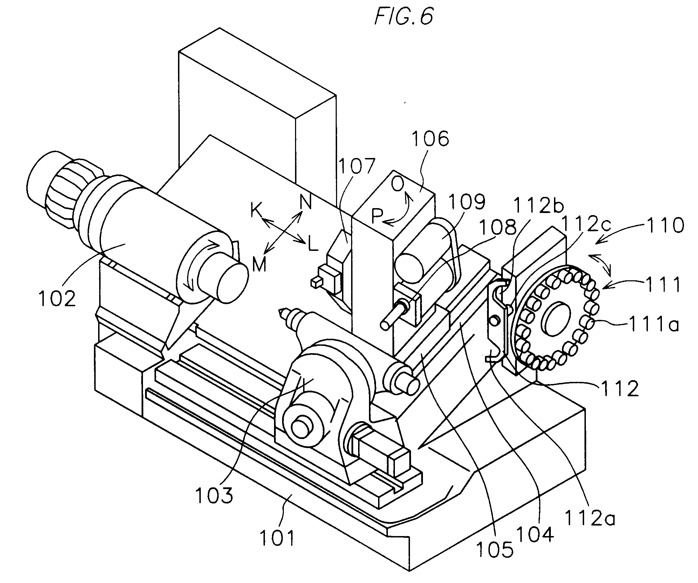

Fig. 6 is a perspective view illustrating such a multi-function lathe. In Fig. 6, there are shown a bed 101, a headstock 102 and a tailstock 103. A carriage 104 provided on the bed 101 is movable in directions as indicated by the arrows K and L. A cross slide 105 provided on the carriage 104 is movable in directions as indicated by the arrows M and N. A column 106 stands upright on the cross slide 105. A turret 107 and a tool spindle 108 are provided on opposite sides of the column 106. The turret 107, the tool spindle 108 and the column 106 constitute a tool post. The tool spindle 108 is rotated about its axis by a driving motor 109 provided thereabove. The column 106 is pivoted in directions as indicated by the arrows O and P by driving means not shown so as to be indexed at desired angles.

A tool exchanger 110 disposed on a rearward portion of the right side face of the bed 101 as viewed in Fig. 6 includes a tool magazine 111 having a plurality of tool retention pots 111a circularly arranged thereon and a tool exchanger arm 112 supported rotatably about a support shaft 112c and retractable along the longitudinal axis of the support shaft 112c. Though the construction of the tool magazine 111 is not illustrated in detail, the tool retention pots 111a on the tool magazine 111 are revolvable about the center of the tool magazine 111 in arrow directions so that a desired one of the tool retention pots 111a can be indexed to a predetermined tool exchanging position at which the tool retention pot 111a is tilted with its axis being parallel to the axis of the tool spindle 108. The tool exchanger arm 112 has tool holders 112a and 112b at opposite ends thereof.

With the multi-function lathe, the turning operation is performed with the use of a tool attached to the turret 107, and the drilling, facing or grinding operation is performed with the use of a tool attached to the tool spindle 108. For replacement of a tool attached to the tool spindle 108 in accordance with a machining operation to be next performed, one of the tool retention pots 111a of the tool magazine 111 retaining a desired tool is first indexed to the tool exchanging position, and then tilted with its axis being parallel to the axis of the tool spindle 108. The carriage 104 and the cross slide 105 are moved in the directions of the arrows L and N, respectively, so as to locate the tool spindle 108 in the tool exchanging position.

In turn, the tool exchanger arm 112 is rotated 90 degrees so as to hold a tool currently attached to the tool spindle 108 by means of the tool holder 112a and, at the same time, hold a tool (to be next attached to the tool spindle 108) retained in the tool retention pot 111a by means of the tool holder 112b. Then, the tool exchanger arm 112 is advanced thereby to withdraw the tool currently attached to the tool spindle 108 and the tool retained in the tool retention pot 111a. The tool exchanger arm 112, after having been rotated 180 degrees, is retracted to attach the next tool to the tool spindle 108 and, at the same time, return the previous tool into the tool retention pot 111a. Thereafter, the tool exchanger arm 112 is rotated 90 degrees in the reverse direction so as to be returned to its original position. Thus, the replacement of the tool attached to the tool spindle 108 is achieved.

In the conventional multi-function lathe, the tool exchanger 110 is disposed on the rearward portion of the right side face of the bed 101 as viewed in Fig. 6, as described above. This is because a sufficient operating space should be reserved for the carriage 104 and the tailstock 103 to prevent the tool exchanger 110 from interfering with the carriage 104 and the tailstock 103.

Since the tool exchanger 110 is located on the rear side of the bed 101 remotely from the headstock 102 in the conventional multi-function lathe, the tool spindle 108 should travel from a position adjacent to the headstock 102 (where a machining operation is completed) to the rear side of the bed 101 every time a tool is to be replaced after the completion of the machining operation. Therefore, the tool replacement cannot speedily be carried out because the time required for the traveling of the tool spindle 108 is a down-time.

In the field of the machining industry, there is a constant demand for reduction of the machining time with the aim of reduction in production costs. To meet this demand, the tool replacement time in the multifunction lathe should be further reduced.

### SUMMARY OF THE INVENTION

It is an object of the present invention to provide a multi-function lathe which features speedy tool replacement. In accordance with the present invention, there is provided a multi-function lathe which is capable of performing a plurality of machining operations and comprises a bed, a headstock, a carriage reciprocally movable longitudinally of the bed, a cross slide provided on the carriage and reciprocally movable perpendicularly to the direction of the movement of the carriage, and a tool post provided on the cross slide and having at least a tool spindle for rotatably holding a tool, the lathe characterized in that a first tool exchanger is attached to the carriage, the tool exchanger having a tool magazine for retaining a plurality of tools therein and indexing any one of the tools to a tool exchanging position and a tool exchanger arm for replacing the tool held by the tool spindle with the tool indexed on the tool magazine, the tool exchanger being movable toward and away from the tool post.

In this multi-function lathe, the tool exchanger is moved to a position remote from the tool post when a workpiece is to be machined. On the other hand, when the tool held by the tool spindle is to be replaced with the tool held by the tool magazine, the tool exchanger is moved to a position adjacent to the tool post. At the same time, the cross slide is driven to move the tool spindle to the tool exchanging position, and then the tool held by the tool spindle is replaced with the tool held by the tool magazine by means of the tool exchanger arm.

For combined machining operations, the tool post is pivoted as required depending upon a machining operation to be performed. Even in such a case, the pivot of the tool post does not interfere with the operation of the tool exchanger because the tool exchanger is located at the position remote from the tool post during the machining operation.

Since the tool exchanger is located at the position adjacent to the tool post during the tool replacement, the turning radius of a tool holder of the tool exchanger arm can be reduced, whereby the circumferential rotation speed of the tool holder can be reduced. Therefore, the tool exchanger arm can stably hold the tool during the rotation thereof. Conversely, if the tool exchanger arm can stably hold the tool, the rotation speed of the tool exchanger arm can be increased to speed up the tool replacement operation.

Since the tool exchanger is attached to the carriage, it is merely necessary to move the cross slide without moving the carriage for the tool replacement. Therefore, the traveling time of the tool exchanger can be reduced, compared with the conventional lathe in which the carriage is moved to the rear side of the bed. Thus, the time required for the tool replacement can be reduced.

In the present invention, the multi-function lathe may further include a second tool exchanger disposed at a fixed position in the lathe and having a second tool magazine for retaining a plurality of tools therein and indexing any one of the tools to a tool exchanging position and a second tool exchanger arm for replacing any one of the tools retained by the tool magazine of the first tool exchanger with the tool indexed on the second tool magazine.

In this multi-function lathe, the second tool magazine retains the plurality of tools as described above. The tools retained by the tool magazine of the first tool exchanger can be replaced with the tools retained by the second tool magazine as required. Even if a greater number of tools are required for combined machining operations, a workpiece once chucked can be subjected to the machining operations without operator intervention.

Since the second tool magazine has a greater tool retaining capacity, the number of the tools to be retained by the tool magazine of the first tool exchanger can be reduced for weight reduction of the tool magazine. Therefore, the carriage can be moved at a higher speed for reduction of the machining time.

### BRIEF DESCRIPTION OF THE DRAWINGS

Fig. 1 is a perspective view illustrating a multi-function lathe according to a preferred embodiment of the present invention;
Fig. 2 is a perspective view for explaining a tool replacement operation to be performed in the multifunction lathe shown in Fig. 1;
Fig. 3 is a perspective view illustrating a multi-function lathe according to another preferred embodiment of the present invention;
Fig. 4 is a perspective view illustrating a multi-function lathe according to further another preferred embodiment of the present invention;
Fig. 5 is a perspective view of the multi-function lathe as seen from the side II in Fig. 4; and
Fig. 6 is a perspective view illustrating a conventional multi-function lathe.

### DETAILED DESCRIPTION OF THE PREFERRED EMBODIMENTS

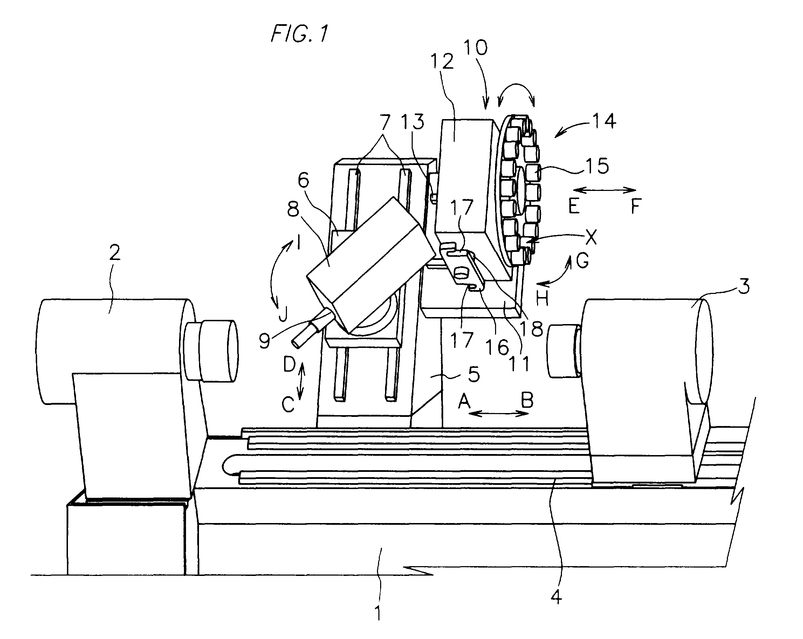

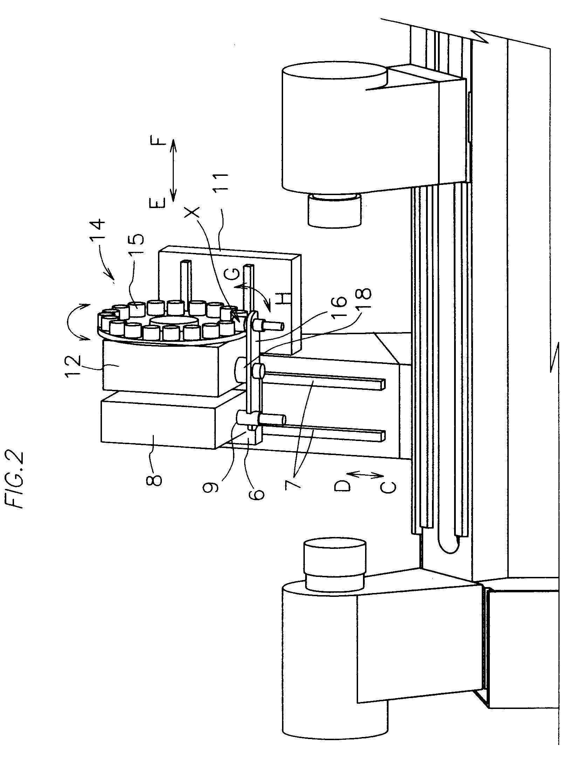

A preferred embodiment of the present invention will hereinafter be described with reference to Figs. 1 and 2, which are perspective views illustrating a multi-function lathe according to the embodiment. In Figs. 1 and 2, there are shown a bed 1, a headstock 2 disposed on the bed 1, and a tailstock 3 provided on the bed 1 in slidable engagement with slide rails 4 for movement in directions as indicated by the arrows A and B.

A carriage 5 is movable in the directions of the arrows A and B in slidable engagement with slide rails (not shown) which are provided on the rear side of the slide rails 4. A cross slide 6 is movable in directions as indicated by the arrows C and D in slidable engagement with slide rails 7 provided on a slant surface of the carriage 5.

A tool post 8 having a tool spindle 9 is provided on the cross slide 6 and pivotal in directions as indicated by the arrows I and J. A driving motor (not shown) for rotatively driving the tool spindle 9 is incorporated in the tool post 8, so that a tool held by the tool spindle 9 can be rotated about the longitudinal axis of the tool spindle 9. Further, the tool post 8 includes a locking mechanism (not shown) for locking the tool held by the tool spindle 9 for prevention of the rotation thereof, so that the tool can be kept in a firmly fixed state. Thus, a turning operation is performed with the tool being firmly fixed, while drilling, facing, grinding and like operations are performed with the tool being rotated.

A tool exchanger (first tool exchanger) 10 is provided on a right side face of the carriage 5 as viewed in Fig. 1, and includes a base plate 11 fixed to the side surface, a support column 12, a tool magazine 14 and a tool exchanger arm 16. The support column 12 can be moved in directions as indicated by the arrows E and F in slidable engagement with slide rails 13 provided on the base plate 11 by proper driving means such as a hydraulic cylinder.

The tool exchanger arm 16 has tool holders 17 provided at opposite ends thereof for holding tools. The tool exchanger arm 16 is supported rotatably about a support shaft 18 provided on a face of the support column 12 on the side of the bed 1, and is retractable along the longitudinal axis of the support shaft 18.

The tool magazine 14 is provided on a right side face of the support column 12 as viewed in Fig. 1, and has a plurality of tool retention pots 15 circularly arranged thereon. The tool retention pots 15 are each a cylindrical member provided with a retention mechanism such as a ball-lock mechanism for retaining a tool therein. The plurality of tool retention pots 15 can be turned circumferentially of the tool magazine 14 and, therefore, any one of the tool retention pots 15 can be indexed to a tool exchanging position X. Further, the tool retention pot 15 at the tool exchanging position X can be pivoted in directions as indicated by the arrows H and G, so that the tool retention pot 15 can be tilted with its axis being parallel to the axis of the support shaft 18.

When a workpiece is to be machined on the multi-function lathe having the aforesaid construction, the support column 12 of the tool exchanger 10 is moved in the direction of the arrow F to a standby position. Thus, the support column 12 is prevented from interfering with the tool post 8 when the tool post 8 is pivoted in the directions of the arrows I and J for the machining operation.

When the tool currently attached to the tool spindle 9 is to be replaced with a tool to be next used, the tool post 8 is rotated in the direction of the arrow I or J so that the current tool is located with its axis being parallel to the axis of the support shaft 18 and its cutting edge being directed to the bed 1, and the cross slide 6 is driven so as to be moved in the direction of the arrow D to a tool exchanging position. In the tool exchanger 10, a tool retention pot 15 retaining the next tool is indexed to the tool exchanging position X and then is pivoted in the direction of the arrow H to be tilted on standby for the tool replacement in the midst of the machining of the workpiece with the current tool.

In turn, the tool exchanger arm 16 is rotated 90 degrees about the axis of the support shaft 18, and holds the current tool attached to the tool spindle 9 and the next tool retained in the tool retention pot 15 by means of the tool holders 17, as shown in Fig. 2. Subsequently, the tool exchanger arm 16 is advanced along the axis of the support shaft 18, and removes the current tool and the next tool from the tool spindle 9 and the tool retention pot 15, respectively. The tool exchanger arm 16, after having been rotated 180 degrees, is retracted along the axis of the support shaft 18, so that the next tool is attached to the tool spindle 9 and the current tool is returned into the tool retention pot 15. After the tool exchanger arm 16 is rotated 90 degrees in the reverse direction to its original position, the support column 12 is moved in the direction of the arrow F to be returned to the standby position, and the tool retention pot 15 is pivoted in the direction of the arrow G thereby to be returned to its original posture.

Thus, the tool attached to the tool spindle 9 can be replaced with the next tool, which is in turn attached to the tool spindle 9 for use in the next machining operation.

In this lathe, the support column 12 is moved in the direction of the arrow F so as to be retracted to the standby position in the midst of the machining operation. Therefore, the support column 12 is prevented from interfering with the tool post 8 which pivots in the directions of the arrows I and J. For the tool replacement, it is merely necessary to move the support column 12 in the direction of the arrow E toward the tool post 8 and to move the tool post 8 in the direction of the arrow D to the tool exchanging position. Therefore, the time required for the movement of the tool post 8 can be reduced in comparison with the conventional lathe in which the carriage is moved to the rear side of the bed. Thus, the tool replacement time can be minimized.

Since the support column 12 is movable toward and away from the tool post 8 and the tool exchanger arm 16 is movable toward the tool spindle 9 for the tool replacement, the turning radius of the tool holders 17 of the tool exchanger arm 16 can be reduced. Accordingly, the circumferential rotation speed of the tools held by the tool holders 17 of the rotated tool exchanger arm 16 can be reduced. Hence, the tool holders 17 can stably hold the tools during the rotation of the tool exchanger arm 16. Conversely, if the tool holders can stably hold the tools, the rotation speed of the tool exchanger arm 16 can be increased to speed up the tool replacement operation.

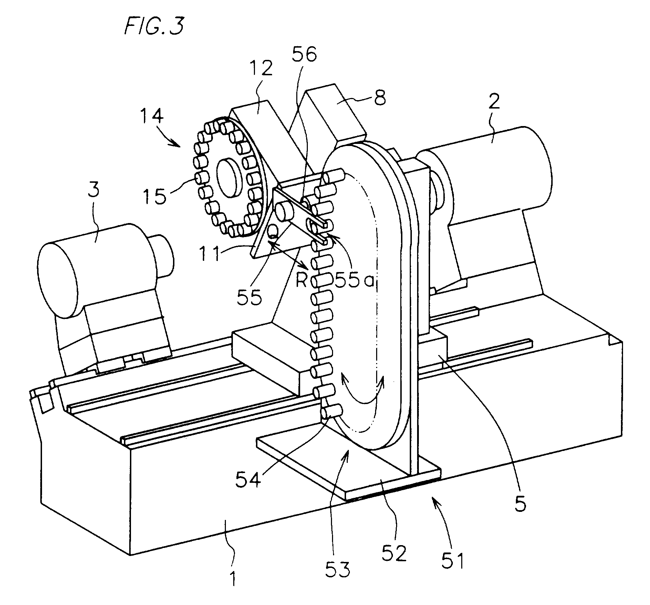

A multi-function lathe according to another embodiment of the present invention is shown in Fig. 3. The multi-function lathe of Fig. 3 has substantially the same construction as the multi-function lathe shown in Fig. 1, except that a second tool exchanger 51 is provided on the rear side of the bed 1. In Fig. 3, the same components as shown in Fig. 1 are denoted by the same reference numerals, and will not herein be explained in detail.

As shown in Fig. 3, the second tool exchanger 51 includes a base plate 52 provided on the rear face of the bed 1, a second tool magazine 53 provided on the base plate 52, and a second tool exchanger arm 55 for replacing any one of the tools retained by the tool magazine 14 of the first tool exchanger 10 with any one of tools retained by the second tool magazine 53.

The second tool magazine 53 has a plurality of tool retention pots 54 circularly linked to one another, for example, by an endless chain. These tool retention pots 54 are circularly moved in directions as indicated by the arrows in Fig. 3 by driving the chain, so that any one of the tool retention pots 54 can be indexed to a tool exchanging position. The tool retention pots 54 each have the same construction as the tool retention pots 15 of the first tool exchanger 10 for retaining a tool therein.

The second tool exchanger arm 55 is provided between the tool magazine 14 and the second tool magazine 53. The second tool exchanger arm 55 has a forked tool holder 55a provided at one end thereof. The other end of the second tool exchanger arm 55 is supported by a support shaft 56 retractably along the axis thereof and rotatably about the axis thereof. The support shaft 56 can be moved toward the tool magazine 14 (in the direction of the arrow Q) and toward the second tool magazine 53 (in the direction of the arrow R) by driving means such as a hydraulic cylinder (not shown).

In the multi-function lathe having the aforesaid construction, any one of the tools retained by the tool magazine 14 of the first tool exchanger 10 can be replaced with any one of the tools retained by the second tool magazine 53 in the following manner. It is herein assumed that the second tool exchanger arm 55 is initially located at a retracted position on the support shaft 56 with the pivot center thereof being located at an intermediate position between the tool magazine 14 of the first tool exchanger 10 and the second tool magazine 53 and with the tool holder 55a being located adjacent the tool magazine 14.

After the tool magazine 14 is moved to a position adjacent to the second tool magazine 53 by driving the carriage 5, desired tool retention pots 15 and 54 of the tool magazine 14 and the second tool magazine 53 are respectively indexed to the tool exchanging positions. For ease of explanation, it is assumed that the indexed tool retention pot 15 retains a tool and the indexed tool retention pot 54 is empty.

In turn, the second tool exchanger arm 55 is moved in the direction of the arrow Q, and the tool retained in the tool retention pot 15 is held by the tool holder 55a. Thereafter, the second tool exchanger arm 55 is advanced along the axis of the support shaft 56 to withdraw the tool from the tool retention pot 15. The second tool exchanger arm 55, after having been moved in the direction of the arrow R to the intermediate position, is pivoted about the axis of the support shaft 56 so as to locate the tool holder 55a adjacent the second tool magazine 53. Subsequently, the second tool exchanger arm 55 is further moved in the direction of the arrow R, and then retracted along the axis of the support shaft 56 to insert the tool held by the tool holder 55a into the tool retention pot 54. Thereafter, the second tool exchanger arm 55 is moved in the direction of the arrow Q to the intermediate position. Thus, the tool is released from the tool holder 55a.

After one of the tool retention pots 54 on the second tool magazine 53 which retains a desired tool is indexed to the tool exchanging position, the second tool exchanger arm 55 is moved in the direction of the arrow R to hold the tool retained in the tool retention pot 54 by means of the tool holder 55a. Thereafter, the second tool exchanger arm 55 is advanced along the axis of the support shaft 56 to withdraw the tool from the tool retention pot 54. The second tool exchanger arm 55, after having been moved in the direction of the arrow Q to the intermediate position, is pivoted about the axis of the support shaft 56 so as to locate the tool holder 55a adjacent the tool magazine 14. Subsequently, the second tool exchanger arm 55 is further moved in the direction of the arrow Q, and then retracted along the axis of the support shaft 56 to insert the tool held by the tool holder 55a into the tool retention pot 15. Thereafter, the second tool exchanger arm 55 is moved in the direction of the arrow R to the intermediate position. Thus, the tool is released from the tool holder 55a.

By repeating the aforesaid operation sequence, the tools retained by the tool magazine 14 of the first tool exchanger 10 can successively be replaced with the tools retained by the second tool magazine 53.

In the lathe, the second tool magazine 53 is capable of retaining a multiplicity of tools, and the tools retained by the tool magazine 14 of the first tool exchanger 10 can be replaced with the tools retained by the second tool magazine 53 as required. Therefore, even if a greater number of tools are required for combined machining operations, a workpiece once chucked can be subjected to the machining operations without operator intervention.

The second tool magazine 53 of the second tool exchanger 51 fixedly provided in the lathe has a greater tool retaining capacity. Therefore, the number of the tools to be retained in the tool magazine 14 of the first tool exchanger 10 can be reduced for reduction of the weight of the tool magazine 14, even if a greater number of tools are required for the machining operations. Accordingly, the carriage 5 can be moved at a higher speed for reduction of the machining time.

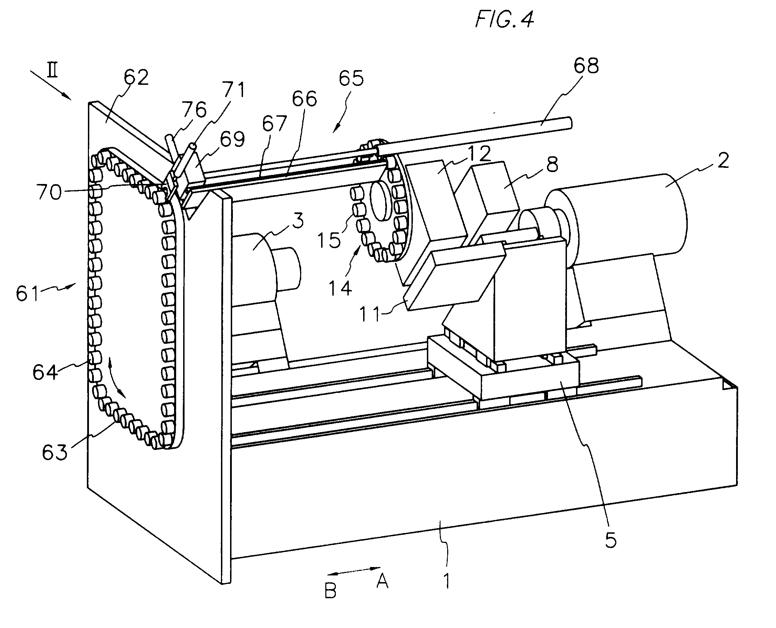

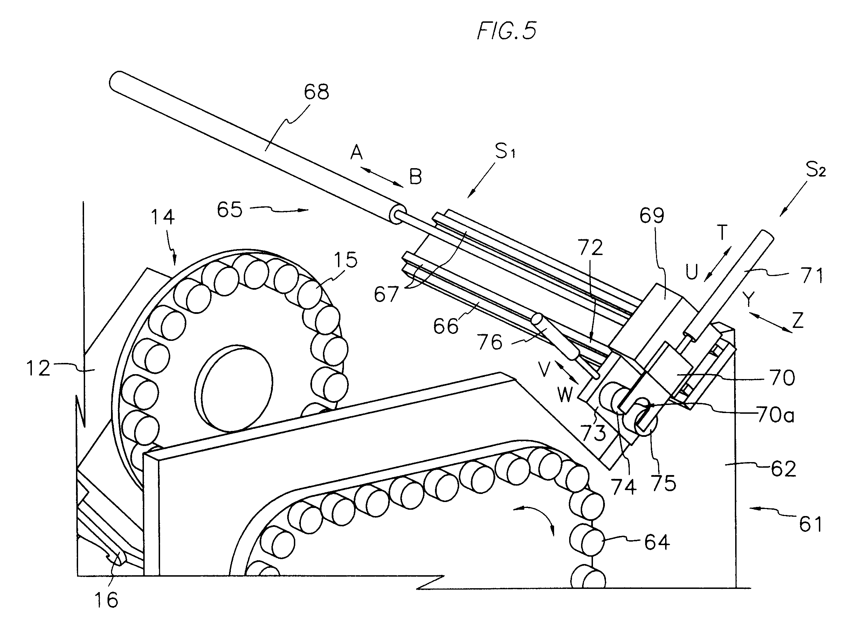

A multi-function lathe according to further another preferred embodiment of the present invention is shown in Figs. 4 and 5. The multi-function lathe shown in Figs. 4 and 5 has substantially the same construction as the multi-function lathe shown in Fig. 1, except that a second tool exchanger 61 is provided on the left side of the bed 1 as viewed in Fig. 4. In Figs. 4 and 5, the same components as shown in Fig. 1 are denoted by the same reference numerals, and will not herein be explained in detail.

As shown in Figs. 4 and 5, the second tool exchanger 61 includes a support plate 62 vertically provided on the left side of the bed 1, a second tool magazine 63 supported by the support plate 62, a second tool exchanger arm 70 for replacing any one of the tools retained by the tool magazine 14 of the first tool exchanger 10 with any one of tools retained by the second tool magazine 63, a transportation device 65 for reciprocally moving the second tool exchanger 70 between a stroke end S₁ located adjacent the tool magazine 14 and a stroke end S₂ located adjacent the second tool magazine 63, and a temporary tool retention device 72 provided adjacent the second tool magazine 63.

The second tool magazine 63 has a plurality of tool retention pots 64 circularly linked to one another, for example, by an endless chain. These tool retention pots 64 are circularly moved in directions as indicated by the arrows in Figs. 4 and 5 by driving the chain, so that any one of the tool retention pots 64 can be indexed to a tool exchanging position. The tool retention pots 64 each have the same construction as the tool retention pots 15 of the first tool exchanger 10.

The transportation device 65 includes a support plate 66 provided above the bed 1 and extending parallel to the length of the bed 1 (in directions as indicated by the arrows A and B), a pair of slide rails 67 provided on the support plate 66, a support base 69 movable in the directions of the arrows A and B in engagement with the slide rails 67, and an air cylinder 68 for driving the support base 69. The support plate 66 and the air cylinder 68 are supported by a structure such as a frame not shown, and the support plate 66 is inclined at the same angle as the base plate 11.

The second tool exchanger arm 70 has a forked tool holder 70a at one end thereof, and supported by the air cylinder 71. The second tool exchanger arm 70 can be moved in directions as indicated by the arrows T and U by the air cylinder 71 so as to be positioned at its opposite stroke ends and at an intermediate position therebetween. The air cylinder 71 is attached to the support base 69, and moved in directions as indicated by the arrows Y and Z between its opposite stroke ends along with the second tool exchanger arm 70 by driving means not shown.

The temporary tool retention device 72 has a pair of temporary retention pots 74 and 75 aligned perpendicularly to a top surface of the support plate 66, a support plate 73 supporting the temporary retention pots 74 and 75, and an air cylinder 76 for moving the support plate 73 in directions as indicated by the arrows V and W between its opposite stroke ends. The temporary retention pots 74 and 75 each have the same construction as the tool retention pots 15. The air cylinder 76 is attached to the support base 69 via a frame or the like not shown. The temporary tool retention device 72 is movable in the directions of the arrows A and B between its opposite stroke ends along with the support base 69.

In the multi-function lathe having the aforesaid construction, any one of the tools retained by the tool magazine 14 of the first tool exchanger 10 is replaced with any one of the tools retained by the second tool magazine 63 in the following manner. It is herein assumed that the support base 69 is initially located at the stroke end S₂, that the second tool exchanger arm 70 is initially located at its stroke end proximal to the air cylinder 71, that the support plate 73 is initially located at its stroke end proximal to the air cylinder 76, and that the air cylinder 71 and the second tool exchanger arm 70 are initially located at their stroke end proximal to the support base 69.

The tool magazine 14 of the first tool exchanger 10 is moved to the predetermined tool exchanging position by driving the carriage 5, and desired tool retention pots 15 and 64 of the tool magazine 14 and the second tool magazine 63 are respectively indexed to the tool exchanging positions. These tool retention pots 15 and 64 respectively retain desired tools.

In turn, the second tool exchanger arm 70 is moved in the direction of the arrow U to its stroke end by driving the air cylinder 71, and the tool retained in the tool retention pot 64 located at the tool exchanging position is held by the tool holder 70a of the second tool exchanger arm 70. Then, the air cylinder 71 and the second tool exchanger arm 70 are moved in the direction of the arrow Z to their stroke end to withdraw from the tool retention pot 64 the tool retained therein. Subsequently, the second tool exchanger arm 70 is moved in the direction of the arrow T to the intermediate position between its opposite stroke ends by driving the air cylinder 71, and then the air cylinder 71 and the second tool exchanger arm 70 are moved in the direction of the arrow Y to their stroke end to insert the tool held by the tool holder 70a into the temporary retention pot 75. Thereafter, the second tool exchanger arm 70 is further moved in the direction of the arrow T to its stroke end by driving the air cylinder 71. Thus, the tool is released from the tool holder 70a.

After the support base 69 is moved in the direction of the arrow A to its stroke end S₁ by driving the air cylinder 68 and the support plate 73 is moved in the direction of the arrow W to its stroke end by driving the air cylinder 76, the second tool exchanger arm 70 is moved in the direction of the arrow U to its stroke end by driving the air cylinder 71 to hold the tool retained in the tool retention pot 15 located at the tool exchanging position by means of the tool holder 70a thereof. In turn, the air cylinder 71 and the second tool exchanger arm 70 are moved in the direction of the arrow Z to their stroke end so as to withdraw from the tool retention pot 15 the tool retained therein. Subsequently, the second tool exchanger arm 70 is moved in the direction of the arrow T to the intermediate position by driving the air cylinder 71, and then the air cylinder 71 and the second tool exchanger arm 70 are moved in the direction of the arrow Y to their stroke end to insert the tool held by the tool holder 70a into the temporary retention pot 74. Thereafter, the second tool exchanger arm 70 is further moved in the direction of the arrow T to its stroke end by driving the air cylinder 71. Thus, the tool is released from the tool holder 70a. In parallel to the aforesaid operation sequence, a desired one of the tool retention pots 64 which retains no tool is indexed to the tool exchanging position on the second tool magazine 63.

After the support plate 73 is moved in the direction of the arrow V to its stroke end by driving the air cylinder 76, the second tool exchanger arm 70 is moved in the direction of the arrow U to the intermediate position. Thus, the tool retained in the temporary retention pot 75 is held again by the tool holder 70a of the second tool exchanger arm 70. Then, the air cylinder 71 and the second tool exchanger arm 70 are moved in the direction of the arrow Z to their stroke end to withdraw from the temporary retention pot 75 the tool retained therein. At the same time, a desired one of the tool retention pots 15 which retains no tool is indexed to the tool exchanging position on the tool magazine 14 of the first tool exchanger 10.

After the second tool exchanger arm 70 is further moved in the direction of the arrow U to its stroke end by driving the air cylinder 71, the air cylinder 71 and the second tool exchanger arm 70 are moved in the direction of the arrow Y to their stroke end. Thus, the tool held by the tool holder 70a is inserted into the tool retention pot 15, and retained therein. Then, the second tool exchanger arm 70 is moved in the direction of the arrow T to its stroke end by driving the air cylinder 71 thereby to release the tool from the tool holder 70a.

In turn, the support plate 73 is moved in the direction of the arrow W to its stroke end by driving the air cylinder 76, and the support base 69 is moved in the direction of the arrow B to its stroke end S₂ by driving the air cylinder 68. Then, the second tool exchanger arm 70 is moved in the direction of the arrow U to the intermediate position. Thus, the tool retained in the temporary retention pot 74 is held again by the tool holder 70a of the second tool exchanger arm 70. Subsequently, the air cylinder 71 and the second tool exchanger arm 70 are moved in the direction of the arrow Z to their stroke end to withdraw from the temporary retention pot 74 the tool retained therein.

After the second tool exchanger arm 70 is further moved in the direction of the arrow U to its stroke end by driving the air cylinder 71, the air cylinder 71 and the second tool exchanger arm 70 are moved in the direction of the arrow Y to their stroke end. Thus, the tool held by the tool holder 70a is inserted into the tool retention pot 64, and retained therein. In turn, the second tool exchanger arm 70 is moved in the direction of the arrow T to its stroke end by driving the air cylinder 71 thereby to release the tool from the tool holder 70a.

Thus, the tool retained in the tool magazine 14 of the first tool exchanger 10 can be replaced with the tool retained by the second tool magazine 63. By repeating the aforesaid operation sequence, the tools retained by the tool magazine 14 of the first tool exchanger 10 can successively be replaced with the tools retained by the second tool magazine 63.

While the present invention has thus been described by way of the embodiments thereof, it should be understood that these embodiments are not limitative of the invention. For example, a turret for fixedly holding a tool and a tool spindle for rotatably holding a tool may be provided as separate members in the tool post 8 as in the conventional lathe.

A multi-function lathe is provided which essentially comprises a tool post having at least a tool spindle for rotatably holding a tool and is capable of performing a variety of machining operations such as turning, drilling and facing operations. The multi-function lathe further comprises a tool exchanger attached to a carriage and having a tool magazine for retaining a plurality of tools therein and indexing any one of the tools to a tool exchanging position and a tool exchanger arm for replacing the tool held by the tool spindle with the tool indexed on the tool magazine. The tool exchanger is movable toward and away from the tool post. When a workpiece is to be subjected to a machining operation, the tool exchanger is moved to a position remote from the tool post. For the tool replacement, the tool exchanger is moved to a position adjacent to the tool post. Therefore, the tool exchanger is prevented from interfering with the tool post during the machining operation. For the tool replacement, it is merely necessary to move a cross slide adjacent the tool exchanger without moving the carriage. Hence, the time required for the tool replacement can be reduced.

## Claims

1. A multi-function lathe which is capable of performing a plurality of machining operations and comprises a bed (1), a headstock (2), a carriage (5) reciprocally movable longitudinally of the bed (1), a cross slide (6) provided on the carriage (5) and reciprocally movable perpendicularly to the direction of the movement of the carriage (5), and a tool post (8) provided on the cross slide (6) and having at least a tool spindle (9) for rotatably holding a tool, the lathe characterized in that a first tool exchanger (10) is attached to the carriage (5), the tool exchanger (10) having a tool magazine (14) for retaining a plurality of tools therein and indexing any one of the tools to a tool exchanging position and a tool exchanger arm (16) for replacing the tool held by the tool spindle (9) with the tool indexed on the tool magazine (14), the tool exchanger (10) being movable toward and away from the tool post (8).

2. A multi-function lathe as set forth in claim 1, further characterized in that a second tool exchanger (51,61) is provided at a fixed position in the lathe, the second tool exchanger (51,61) having a second tool magazine (53,63) for retaining a plurality of tools therein and indexing any one of the tools to a tool exchanging position and a second tool exchanger arm (55,70) for replacing any one of the tools retained by the tool magazine (14) of the first tool exchanger (10) with the tool indexed on the second tool magazine (53,63).

3. A multi-function lathe as set forth in claim 2, wherein the second tool exchanger (61) further includes a transportation device (65) for reciprocally moving the second tool exchanger arm (70) between the tool exchanging position for the tool magazine (14) of the first tool exchanger (10) and the tool exchanging position for the second tool magazine (63).

4. A multi-function lathe as set forth in claim 3, wherein the second tool exchanger (61) further includes temporary tool retainer (72) for temporarily retaining the tool to be replaced by means of the second tool exchanger arm (70) in a tool replacement operation.

5. A multi-function lathe as set forth in claim 4, wherein the temporary tool retention means (72) is reciprocally movable along with the second tool exchanger arm (70).
